# FASCICULE DE BREVET EUROPEEN

(11) **EP 4 424 406 B1**
(45) Date de publication et mention de la délivrance du brevet: **10.09.2025**
(21) Numéro de dépôt: 24157686.7
(22) Date de dépôt: 14.02.2024
(51) Int. Cl.: B01D 53/60, B01D 53/78, F23J 15/04

(54) **PROCÉDÉ ET APPAREIL DE LAVAGE D'UN FLUX GAZEUX**
VERFAHREN UND VORRICHTUNG ZUM WASCHEN EINES GASSTROMS
METHOD AND APPARATUS FOR SCRUBBING A GAS STREAM

(30) Priorité: 28.02.2023 FR 2301845
(43) Date de publication de la demande: 04.09.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: CALORO, Gian Luigi, 94503 CHAMPIGNY SUR MARNE (FR); RAVENTOS, Martin, 94503 CHAMPIGNY SUR MARNE (FR); FUENTES, François, 94503 CHAMPIGNY SUR MARNE (FR)
(74) Mandataire: Air Liquide

(56) Documents cités:
- JP-A- 2013 087 988
- JP-A- 2015 137 797
- US-A1- 2015 352 490
- US-A1- 2017 312 683

## Description

La présente invention concerne un procédé et un appareil de lavage d'un flux gazeux. Le flux gazeux peut être un gaz à haute température (typiquement au moins 150°C, voire au moins 180°C) par exemple généré par une combustion. Il peut également être à une température ambiante. Il contient à base sèche au moins 15% mol de dioxyde de carbone et est traité afin de récupérer le CO2 et éviter que celui-ci soit rejeté à l'atmosphère.

Les changements climatiques constituent l'un des plus grands défis environnementaux. L'accroissement de la concentration en dioxyde de carbone dans l'atmosphère est en très grande partie la cause du réchauffement global. Le CO2 d'origine humaine est essentiellement émis dans l'atmosphère par la combustion des combustibles fossiles dans les centrales thermiques. Les centrales thermiques permettent par combustion de combustibles de dégager de la chaleur utilisable pour produire de la vapeur d'eau et éventuellement de l'énergie mécanique ou électrique. Les fumées de combustion dégagent des quantités importantes de CO2 dans l'atmosphère. Le processus de combustion conduit particulièrement à la production de fumées comprenant principalement du CO2, de l'eau, par exemple 30% mol d'eau, des gaz issus de l'air appelés aussi incondensables (N2, Ar, O2), et des gaz acides appelés NOx et SOx et des quantités importantes de poussière.

Lors des étapes de traitement et de purification, notamment de la compression (suivie d'une réfrigération), les SOx et/ou les NOx, noms génériques qui regroupent l'ensemble des oxydes de soufres et l'ensemble des oxydes d'azote, vont générer des condensats acides, notamment : acide nitrique, nitreux, sulfurique, sulfureux... qu'il faut éviter pour limiter le risque de corrosion.

Le lavage a pour but de baisser la température du gaz de combustion, en abattre la matière en suspension, par exemple les poussières, et les composants acides contenus dans le gaz de combustion.

En fonction de la composition du gaz de combustion, le lavage peut être effectué avec de l'eau ou de l'eau rendue basique par le rajout d'une base.

Les lavages humides basiques sont une technologie reconnue dans le traitement des fumées pour l'élimination des gaz acides contenus dans les fumées. Les bases sodium sont préférées parce qu'elles présentent un bon compromis entre leurs performances (solubilité et donc aptitude à éviter la précipitation) et leur disponibilité et coût associé. On peut citer par exemple : NaOH, Na2CO3, NaHCO3....).

Le flux gazeux comprenant au moins un NOx et/ou au moins un SOx et au moins 15% mol de CO2 à base sèche entre à contre-courant dans une tour servant de contacteur gaz/liquide pour le lavage humide basique avant d'en ressortir, en tête de la tour, enrichi en CO2 et à teneur réduite en l'au moins un NOx et/ou l'au moins un SOx. De la soude caustique et/ou de l'eau est envoyée en tête du contacteur pour laver le flux gazeux. Au pied du contacteur gaz-liquide, le liquide qui a été en contact avec le flux est soutiré. Le liquide contenant de l'eau acidifiée peut également contenir des impuretés solides (particules telles que de la poussière contenue dans le gaz de combustion) et/ou des minéraux dissous dans le liquide.

Le flux gazeux sortant de la tour a une teneur réduite en NOx et/ou SOx ensuite est comprimé dans un compresseur et séché dans un sécheur pour être envoyé à une unité de séparation de CO2 pour enlever l'azote et l'oxygène qu'il contient. Cette unité opère par condensation partielle et/ou par distillation, produisant un fluide riche en CO2. Ce fluide riche en CO2 est parfois pressurisé avant d'être utilisé par un client ou séquestré. L'unité produit également au moins un gaz enrichi en azote et/ou en oxygène.

Un réseau d'eau de refroidissement en circuit fermé est généralement utilisé pour refroidir le gaz provenant du contacteur en sortie des étages de compression du compresseur et en amont du sécheur.

Le liquide sortant en cuve de la tour de lavage est généralement traité pour neutraliser les substances nocives qu'il contient et est envoyé à une unité de traitement de l'eau. En particulier il peut être traité par neutralisation acido-basique pour éliminer le NOx et/ou SOx qu'il contient.

JP2015 137797 décrit un procédé dans lequel du liquide d'une tour de lavage de fumées est pompé et envoyé à un évaporateur.

La présente invention consiste à utiliser le liquide sortant en cuve de la tour de lavage pour refroidir de l'eau. Le liquide est éventuellement traité pour en réduire la quantité de matière en suspension et de minéraux dissous et ensuite est évaporé dans un courant d'air à l'entrée des aéroréfrigérants d'un circuit d'eau de refroidissement afin de baisser la température de l'air et par conséquent baisser la température de l'eau froide produite par les aéroréfrigérants. Cette eau froide sert ensuite à refroidir un compresseur du procédé de séparation de CO2, ce qui se traduit par une réduction de l'énergie de compression des gaz de combustion dont on veut capturer le CO2.

Un but de l'invention est de produire de l'air refroidi et de l'eau refroidie avec le liquide de cuve de la tour de lavage.

Selon un objet de l'invention, il est prévu un procédé de lavage d'un flux gazeux dans lequel :
i) un flux gazeux comprenant au moins un NOx et/ou au moins un SOx et/ou de la matière en suspension et au moins 15% mol de CO2 à base sèche est envoyé à une tour de lavage dans lequel il est refroidi et lavé au moyen d'eau et/ou d'un liquide alcalin pour produire un gaz enrichi en CO2 en tête de la tour et un liquide de cuve enrichi en l'au moins un NOx et/ou l'au moins un SOx et/ou des matières en suspension en cuve de la tour,
ii) au moins une partie du liquide de cuve est éventuellement filtrée et/ou déminéralisée pour produire un liquide épuré,
iii) au moins une partie du liquide de cuve de l'étape i) ou le liquide épuré de l'étape ii), si présente, est utilisé pour refroidir un débit d'air par évaporation en contact direct ou par échange de chaleur indirect formant un débit d'air refroidi, et
iv) le débit d'air refroidi sert à refroidir un débit d'eau par échange de chaleur indirect ou direct formant un débit d'eau refroidi.

Selon d'autres aspects facultatifs de l'invention, il est prévu :
- du liquide de la tour de lavage est vaporisé pour refroidir de l'air ambiant qui sert ensuite à refroidir de l'eau produisant de l'eau de refroidissement à utiliser en amont ou en aval de la tour de lavage.
- l'au moins une partie du liquide de cuve de l'étape i) ou le liquide épuré de l'étape ii) si présente est pressurisé par une pompe en amont de l'étape iii).
- le débit d'eau refroidi sert à refroidir un gaz comprimé entre deux étages d'un compresseur et/ou après le dernier étage d'un compresseur par échange de chaleur, le compresseur étant un compresseur
   i) Du flux gazeux en amont de la tour ou
   ii) Du gaz enrichi en CO2 soutiré en tête de la tour ou
   iii) D'un produit enrichi en CO₂ produit par condensation partielle et/ou distillation du gaz enrichi en CO₂ soutiré en tête de la tour, ce gaz contenant de l'oxygène et/ou de l'azote et/ou du monoxyde de carbone.
- l'au moins une partie du liquide de cuve est traitée en amont de sa vaporisation pour éliminer au moins partiellement l'au moins un NO_{X} et/ou l'au moins un SOₓ et/ou les matières en suspension qu'il contient, les composants éliminés étant disposés.
- l'au moins une partie du liquide de cuve de l'étape i) ou le liquide épuré de l'étape ii) si présente est stocké dans un stockage en amont de la vaporisation.
- l'au moins une partie du liquide de cuve de l'étape i) ou le liquide épuré de l'étape ii), si présente, n'est pas utilisé pour refroidir le débit d'air par évaporation si la température ambiante est inférieure à un seuil et est stocké dans le stockage si la température ambiante est inférieure au seuil.
- l'au moins une partie du liquide de cuve de l'étape i) ou le liquide épuré de l'étape ii), si présente, est utilisé pour refroidir un débit d'air par évaporation seulement si la température ambiante est plus élevée que le seuil.
- le débit de liquide est vaporisé par nébulisation ou dans des aéroréfrigérants adiabatiques ou dans des aéroréfrigérants hybrides.

Selon un objet de l'invention, il est prévu un appareil de lavage d'un flux gazeux comprenant une tour de lavage, éventuellement une unité de traitement, éventuellement un stockage, un évaporateur, un moyen d'échange de chaleur, des moyens pour envoyer un flux gazeux comprenant au moins un NOx et/ou au moins un SOx et/ou de la matière en suspension et au moins 15% mol de CO2 à base sèche à la tour de lavage pour le refroidir et le laver au moyen d'eau et/ou d'un liquide alcalin pour produire un gaz enrichi en CO2 en tête de la tour et un liquide de cuve enrichi en l'au moins un NOx et/ou l'au moins un SOx et/ou des matières en suspension en cuve de la tour, des moyens pour sortir le liquide de cuve de la tour, des moyens pour envoyer au moins une partie du liquide de cuve à l'évaporateur pour se vaporiser par échange de chaleur direct ou indirect avec une débit d'air, éventuellement après avoir traité l'au moins une partie du liquide de cuve dans l'unité de traitement pour l'épurer et/ou après avoir stocké l'au moins une partie du liquide de cuve dans le stockage, des moyens pour envoyer le débit d'air refroidi dans l'évaporateur au moyen d'échange de chaleur pour échange de chaleur indirect ou direct avec un débit d'eau à refroidir formant un débit d'eau refroidi.

Selon d'autres aspects facultatifs :
- l'appareil comprend une pompe pour pressuriser l'au moins une partie du liquide de cuve ou le liquide épuré si présente en amont de l'évaporateur.
- l'appareil comprend une unité de traitement pour traiter l'au moins une partie du liquide de cuve en amont de l'évaporateur pour éliminer au moins partiellement l'au moins un NO_{X} et/ou l'au moins un SOₓ et/ou les matières en suspension qu'il contient.
- l'appareil comprend un stockage pour stocker l'au moins une partie du liquide de cuve ou le liquide épuré en amont de l'évaporateur.
- l'appareil comprend des moyens pour réguler l'envoi de l'au moins une partie du liquide de cuve ou le liquide épuré vers l'évaporateur en fonction de la température ambiante.

Un appareil de séparation d'un flux gazeux peut comprendre un appareil de lavage tel que décrit ci-dessus, un compresseur et un appareil de séparation par distillation et/ condensation partielle relié à l'appareil de lavage pour séparer le gaz enrichi en CO2 formant un fluide produit enrichi en CO2 par rapport au gaz, des moyens pour envoyer le débit d'eau refroidi refroidir le compresseur, le compresseur étant un compresseur
i) Du flux gazeux en amont de la tour ou
ii) Du gaz enrichi en CO2 soutiré en tête de la tour ou
iii) D'un produit enrichi en CO₂ produit par condensation partielle et/ou distillation du gaz enrichi en CO₂ soutiré en tête de la tour.

L'évaporation du liquide de la tour peut être réalisée de différentes manières : nébulisation (en anglais « fogging »), dans des aéroréfrigérants adiabatiques, dans des aéroréfrigérants hybrides de type WSAC (en anglais « Wet Surface Air Coolers »). En fonction des impuretés contenues dans les condensats et en fonction de la qualité de l'eau nécessaire pour l'équipement réalisant l'évaporation, l'unité de traitement pourra inclure une filtration pour réduire/éliminer la matière en suspension et une chaine de déminéralisation pour réduire/éliminer les espèces dissoutes.

Dans tous les cas, l'unité de traitement permettra le dégazage des gaz nocifs dissous dans les condensats en les envoyant à l'air par une cheminée ou à un autre endroit sécurisé et en évitant ainsi le risque d'intoxication pour tout opérateur se trouvant à manipuler ces effluents.

Le débit de liquide produit dans la tour n'est typiquement pas suffisant par assurer un refroidissement par évaporation qui soit significatif en continu, 24h/24h. Donc, afin de disposer d'un débit de condensat plus important, le liquide de la tour est stocké, après traitement éventuel, dans un réservoir. Seulement quand la température ambiante passe au-dessus d'un seuil, le liquide sort du stockage et est ensuite pompé vers le système d'évaporation. De cette manière, le liquide produit pendant la nuit (et plus en générale pendant les heures les moins chaudes de la journée) peut être utilisé la journée quand la température ambiante est la plus élevée et le besoin en refroidissement est le plus important.

L'invention sera décrite de manière plus détaillée en se référant à la figure.

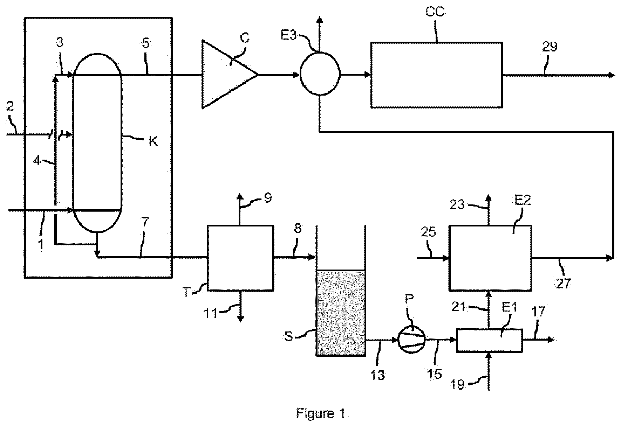

[FIG.1] illustre un procédé selon l'invention.

[FIG.1] montre un procédé de lavage dans lequel un gaz 1 produit par une combustion contient de préférence au moins 15% mol de dioxyde de carbone, de l'eau, de l'azote et/ou de l'oxygène et/ou de l'argon et du SOx et/ou du NOx et/ou de la matière en suspension, telle que des poussières.

Dans ce procédé de lavage d'un flux gazeux, du liquide 7 de la tour de lavage K est vaporisé en l'échangeur E1 pour refroidir de l'air ambiant 19 qui sert ensuite à refroidir de l'eau 25 produisant de l'eau de refroidissement 27 à utiliser en amont ou en aval du procédé de lavage.

Le gaz de combustion chaud 1 est envoyé à une tour de lavage K alimentée en tête par un débit d'eau 3 récupérée en cuve de la même tour et additionnée si besoin en soude caustique 2. Le gaz 5, refroidi et lavé des SOx et/ou NOx et/ou matière en suspension (poussières), sort en tête de la tour. Le lavage peut s'effectuer à une pression atmosphérique ou sinon à une pression plus élevée, par exemple au moins égale à 2 bars abs.

En cuve de la tour, la partie 7 de liquide qui n'est pas recyclée en haut de la tour de lavage K se retrouve enrichie en SOx et/ou en NOx et/ou en matière en suspension et peut être envoyée à une unité de traitement T où elle est par exemple filtrée pour enlever les particules solides qu' elle contient et/ou déminéralisée à un niveau plus ou moins élevé en fonction de niveau de déminéralisation exigé par l'échangeur de chaleur E1 où s'effectue l'évaporation qui refroidit l'air ambiante aspiré par les aéroréfrigérants du circuit d'eau de refroidissement.

Le liquide traité 8 est de préférence envoyé à un stockage S, qui peut être un bassin naturel.

Le liquide 11 en sortie de l'unité de traitement T concentre les SOx et/ou les NOx et/ou les matières en suspension retirées au liquide traité 8 et peut être disposé selon la réglementation en vigueur.

Si besoin, à travers la sortie 9 l'unité de traitement T peut également éliminer les gaz éventuellement dissous qu'il ne serait pas souhaitable avoir dans le liquide traité 8. Un traitement chimique, par exemple neutralisation acido-basique, permet d'enlever les SOx et/ou NOx qu'il contient.

A partir du stockage S, le liquide traité 8 est pressurisé comme liquide 13 dans une pompe P formant un liquide pressurisé 15. Le liquide 15 est envoyé à un échangeur de chaleur E1 (ou évaporateur) où il s'évapore par échange de chaleur indirect ou direct avec un débit d'air 19 qui s'y refroidit. L'évaporation peut avoir lieu par nébulisation en projetant le liquide 15 en fines gouttelettes dans l'air. Sinon l'échangeur E1 peut comprendre des aéroréfrigérants adiabatiques opérant par pulvérisation ou par ruissèlement du liquide dans l'air ou dans des aéroréfrigérants hybrides.

La vapeur d'eau 17 formée par évaporation de l'eau 15, par exemple par contact direct avec l'air 19, sort de l'échangeur de chaleur E1 et l'air refroidi 21 dans l'échangeur E1 est envoyé à un échangeur de chaleur E2 où il refroidit un débit d'eau 25 par échange de chaleur direct ou indirect. L'eau refroidie 27 est envoyé à un échangeur de chaleur E3 où il refroidit le gaz comprimé dans le compresseur C, ce gaz étant le gaz de tête de la tour K. Ainsi l'échangeur E3 sert de refroidisseur final du compresseur C. L'eau peut également refroidir ce compresseur C à un inter-étage.

L'air réchauffé 23 sort de l'échangeur E3.

Le gaz comprimé dans le compresseur C est séché, refroidi et séparé par distillation et/ou condensation partielle dans l'unité de séparation CC pour produire un débit riche en CO2 29. Ceci permet d'éliminer l'oxygène et/ou l'azote et/ou l'argon et/ou le monoxyde de carbone qu'il contient.

Le débit riche en CO2 29 peut être comprimé dans un compresseur, qui peut être refroidi après l'étage final ou en inter-étage par l'eau 27.

Sinon l'eau 27 peut refroidir un étage final ou un inter-étage du compresseur du flux gazeux 1 si la tour K opère sous pression.

Sinon l'eau de refroidissement 27 peut servir n'importe où en amont ou en aval de la tour de lavage K.

Pour tirer bénéfice des températures ambiantes plus froides, le procédé peut opérer en stockant du liquide froid dans le stockage S. Quand la température ambiante et/ou la température de l'air 19 est en dessous d'un seuil, par exemple 15°C la nuit ou en hiver, il n'est pas nécessaire d'envoyer de liquide (ou un débit aussi grand de liquide) à l'évaporateur, puisque l'air est déjà suffisamment froid pour refroidir l'eau dans l'échangeur E2 à la température requise. Sinon dans ce cas, il peut être suffisant d'envoyer un débit de liquide réduit, puisque l'air est presque suffisamment froid pour refroidir l'eau à la température requise dans l'échangeur E2.

En dessous de ce seuil de température ambiante, qui peut être mesurée en déterminant la température extérieure ou celle de l'air 19, du liquide est stocké dans un stockage, de préférence isolée thermiquement. Quand la température ambiante et/ou la température de l'air 19 passe au-dessus du seuil, par exemple 15°C,30°C, il peut être nécessaire de refroidir l'air (ou de refroidir plus l'air) et donc le liquide du stockage est soutiré pour s'évaporer dans l'échangeur E1 (ou un plus grand débit de liquide est soutiré pour s'évaporer dans l'échangeur E1 que pendant la période où la température est en dessous du seuil).

Le débit de liquide vaporisé 17 provenant du stockage S peut être nul si la température ambiante est suffisamment basse. Dans ce cas, on envoie du liquide du stockage S à l'échangeur E1 seulement si la température ambiante est au-dessus d'un seuil de température. Ainsi la pompe P ne marche que si la température ambiante est au-dessus d'un seuil de température, par exemple 15°C, 30°C.

Dans ce cas, l'appareil comprendra des moyens pour réguler l'envoi de l'au moins une partie du liquide de cuve 7 ou le liquide épuré 13 vers l'évaporateur E1 en fonction de la température ambiante.

## Revendications

1. Procédé de lavage d'un flux gazeux dans lequel :
i) un flux gazeux (1) comprenant au moins un NOx et/ou au moins un SOx et/ou de la matière en suspension et au moins 15% mol de CO2 à base sèche est envoyé à une tour de lavage (K) dans lequel il est refroidi et lavé au moyen d'eau (4) et/ou d'un liquide alcalin (2) pour produire un gaz enrichi en CO2 (5) en tête de la tour et un liquide de cuve (3, 7) enrichi en l'au moins un NOx et/ou l'au moins un SOx et/ou des matières en suspension en cuve de la tour,
ii) au moins une partie (7) du liquide de cuve est éventuellement filtrée et/ou déminéralisée pour produire un liquide épuré (8, 13),
iii) au moins une partie du liquide de cuve (7) de l'étape i) ou le liquide épuré (8) de l'étape ii), si présente, est utilisé pour refroidir un débit d'air (19) par évaporation en contact direct ou par échange de chaleur indirect formant un débit d'air refroidi (21), et
iv) le débit d'air refroidi sert à refroidir un débit d'eau (25) par échange de chaleur indirect ou direct formant un débit d'eau refroidi (27).

2. Procédé selon la revendication 1 dans lequel l'au moins une partie du liquide de cuve (7) de l'étape i) ou le liquide épuré (13) de l'étape ii) si présente est pressurisé par une pompe (P) en amont de l'étape iii).

3. Procédé selon la revendication 1 ou 2 dans lequel le débit d'eau refroidi (27) sert à refroidir un gaz comprimé entre deux étages d'un compresseur et/ou après le dernier étage d'un compresseur (C) par échange de chaleur, le compresseur étant un compresseur :
i) Du flux gazeux (1) en amont de la tour (K) ou
ii) Du gaz enrichi en CO2 (5) soutiré en tête de la tour ou
iii) D'un produit enrichi en CO₂ (29) produit par condensation partielle et/ou distillation du gaz enrichi en CO₂ soutiré en tête de la tour, ce gaz contenant de l'oxygène et/ou de l'azote et/ou du monoxyde de carbone.

4. Procédé selon l'une des revendications précédentes dans lequel l'au moins une partie du liquide de cuve (7) est traitée en amont de sa vaporisation pour éliminer au moins partiellement l'au moins un NO_{X} et/ou l'au moins un SOₓ et/ou les matières en suspension qu'il contient, les composants éliminés étant disposés (9, 11).

5. Procédé selon l'une des revendications précédentes dans lequel l'au moins une partie (7) du liquide de cuve de l'étape i) ou le liquide épuré (8) de l'étape ii) si présente est stocké dans un stockage (S) en amont de la vaporisation.

6. Procédé selon la revendication 5 dans lequel l'au moins une partie du liquide de cuve (7) de l'étape i) ou le liquide épuré (8) de l'étape ii), si présente, n'est pas utilisé pour refroidir le débit d'air (19) par évaporation si la température ambiante est inférieure à un seuil et est stocké dans le stockage (S) si la température ambiante est inférieure au seuil.

7. Procédé selon la revendication 6 dans lequel l'au moins une partie du liquide de cuve (7) de l'étape i) ou le liquide épuré (8) de l'étape ii), si présente, est utilisé pour refroidir le débit d'air (19) par évaporation seulement si la température ambiante est plus élevée que le seuil.

8. Procédé selon l'une des revendications précédentes dans lequel le débit de liquide (15) est vaporisé par nébulisation ou dans des aéroréfrigérants adiabatiques ou dans des aéroréfrigérants hybrides (E1).

9. Appareil de lavage d'un flux gazeux comprenant une tour de lavage (K), éventuellement une unité de traitement (T), éventuellement un stockage (S), un évaporateur (E1), un moyen d'échange de chaleur (E2), des moyens pour envoyer un flux gazeux (1) comprenant au moins un NOx et/ou au moins un SOx et/ou de la matière en suspension et au moins 15% mol de CO2 à base sèche à la tour de lavage pour le refroidir et le laver au moyen d'eau (3) et/ou d'un liquide alcalin (2) pour produire un gaz enrichi en CO2 (5) en tête de la tour et un liquide de cuve (3,7) enrichi en l'au moins un NOx et/ou l'au moins un SOx et/ou des matières en suspension en cuve de la tour, des moyens pour sortir le liquide de cuve de la tour, des moyens pour envoyer au moins une partie (7) du liquide de cuve à l'évaporateur pour se vaporiser par échange de chaleur direct ou indirect avec une débit d'air, éventuellement après avoir traité l'au moins une partie du liquide de cuve dans l'unité de traitement pour l'épurer et/ou après avoir stocké l'au moins une partie du liquide de cuve dans le stockage, des moyens pour envoyer le débit d'air refroidi (21) dans l'évaporateur au moyen d'échange de chaleur pour échange de chaleur indirect ou direct avec un débit d'eau (25) à refroidir formant un débit d'eau refroidi (27).

10. Appareil selon la revendication 9 comprenant une pompe pour pressuriser l'au moins une partie du liquide de cuve (7) ou le liquide épuré (13) si présente en amont de l'évaporateur (E1).

11. Appareil selon la revendication 9 ou 10 comprenant une unité de traitement pour traiter l'au moins une partie du liquide de cuve (7) en amont de l'évaporateur (E1) pour éliminer au moins partiellement l'au moins un NO_{X} et/ou l'au moins un SOₓ et/ou les matières en suspension qu'il contient.

12. Appareil selon l'une des revendications 9 -11 comprenant un stockage pour stocker l'au moins une partie (7) du liquide de cuve ou le liquide épuré (8). en amont de l'évaporateur (E1).

13. Appareil selon une des revendications 9- 12 comprenant des moyens pour réguler l'envoi de l'au moins une partie du liquide de cuve (7) ou le liquide épuré (8) vers l'évaporateur en fonction de la température ambiante.

14. Appareil de séparation d'un flux gazeux (1) comprenant un appareil de lavage selon l'une des revendications 9 à 13, un compresseur (C) et un appareil de séparation par distillation et/ condensation partielle (CC) relié à l'appareil de lavage pour séparer le gaz enrichi en CO2 formant un fluide produit enrichi en CO2 par rapport au gaz, des moyens pour envoyer le débit d'eau refroidi refroidir le compresseur, le compresseur étant un compresseur :
i) Du flux gazeux (1) en amont de la tour ou
ii) Du gaz enrichi en CO2 (5) soutiré en tête de la tour ou
iii) D'un produit enrichi en CO2 (29) produit par condensation partielle et/ou distillation du gaz enrichi en CO2 soutiré en tête de la tour.

## Patentansprüche

1. Verfahren zum Waschen eines Gasstroms, bei dem :
i) ein Gasstrom (1), der mindestens ein NOx und/oder mindestens ein SOx und/oder Schwebstoffe und mindestens 15 Mol-% CO2 auf trockener Basis enthält, in einen Waschturm (K) geleitet wird, in dem er gekühlt und mit Hilfe von Wasser (4) und/oder einer alkalischen Flüssigkeit (2) gewaschen wird, um am oberen Ende des Turms ein mit CO2 angereichertes Gas (5) und am unteren Ende des Turms eine mit dem mindestens einen NOx und/oder dem mindestens einen SOx und/oder Schwebstoffen angereicherte Tankflüssigkeit (3, 7) zu erzeugen,
ii) mindestens ein Teil (7) der Tankflüssigkeit optional gefiltert und/oder entmineralisiert wird, um eine gereinigte Flüssigkeit (8, 13) zu erzeugen,
iii) zumindest ein Teil der Tankflüssigkeit (7) aus Schritt i) oder der gereinigten Flüssigkeit (8) aus Schritt ii), falls vorhanden, zur Kühlung eines Luftstroms (19) durch direkte Kontaktverdampfung oder indirekten Wärmeaustausch unter Bildung eines gekühlten Luftstroms (21) verwendet wird, und
iv) der gekühlte Luftstrom wird verwendet, um einen Wasserstrom (25) durch indirekten oder direkten Wärmeaustausch zu kühlen, wodurch ein gekühlter Wasserstrom (27) gebildet wird.

2. Verfahren nach Anspruch 1, bei dem zumindest ein Teil der Tankflüssigkeit (7) aus Stufe i) oder die gereinigte Flüssigkeit (13) aus Stufe ii), sofern vorhanden, durch eine Pumpe (P) vor Stufe iii) unter Druck gesetzt wird.

3. Verfahren nach Anspruch 1 oder 2, bei dem der Strom des gekühlten Wassers (27) dazu verwendet wird, ein verdichtetes Gas zwischen zwei Stufen eines Verdichters und/oder nach der letzten Stufe eines Verdichters (C) durch Wärmeaustausch zu kühlen, wobei der Verdichter ein :
i) der Gasstrom (1) vor dem Turm (K) oder
ii) das CO2-angereicherte Gas (5), das am Kopf des Turms abgezogen wird, oder
iii) ein mit CO₍₂₎-angereichertes Produkt (29), das durch Teilkondensation und/oder Destillation des am Kopf des Turms abgezogenen CO₂-angereicherten Gases hergestellt wird, wobei dieses Gas Sauerstoff und/oder Stickstoff und/oder Kohlenmonoxid enthält.

4. Verfahren nach einem der vorhergehenden Ansprüche, bei dem der mindestens eine Teil der Tankflüssigkeit (7) vor seiner Verdampfung behandelt wird, um das mindestens eine NO_{(X)} und/oder das mindestens eine SOₓund/oder die darin enthaltenen Schwebstoffe zumindest teilweise zu entfernen, wobei die entfernten Bestandteile angeordnet werden (9, 11).

5. Verfahren nach einem der vorhergehenden Ansprüche, bei dem der mindestens eine Teil (7) der Bottichflüssigkeit aus Schritt i) oder die gereinigte Flüssigkeit (8) aus Schritt ii), sofern vorhanden, in einem Tank (S) vor der Verdampfung gespeichert wird.

6. Verfahren nach Anspruch 5, bei dem zumindest ein Teil der Bottichflüssigkeit (7) aus Schritt i) oder der gereinigten Flüssigkeit (8) aus Schritt ii), sofern vorhanden, nicht zur Kühlung des Luftstroms (19) durch Verdampfung verwendet wird, wenn die Umgebungstemperatur unter einem Schwellenwert liegt, und in dem Speicher (S) gespeichert wird, wenn die Umgebungstemperatur unter dem Schwellenwert liegt.

7. Verfahren nach Anspruch 6, bei dem zumindest ein Teil der Tankflüssigkeit (7) aus Schritt i) oder der gereinigten Flüssigkeit (8) aus Schritt ii), sofern vorhanden, nur dann zur Kühlung des Luftstroms (19) durch Verdunstung verwendet wird, wenn die Umgebungstemperatur über dem Schwellenwert liegt.

8. Verfahren nach einem der vorhergehenden Ansprüche, bei dem der Flüssigkeitsstrom (15) durch Vernebelung oder in adiabatischen Luftkühlern oder in Hybridluftkühlern (E1) verdampft wird.

9. Vorrichtung zum Waschen eines Gasstroms, umfassend einen Waschturm (K), gegebenenfalls eine Behandlungseinheit (T), gegebenenfalls einen Speicher (S), einen Verdampfer (E1), ein Wärmeaustauschmittel (E2), Mittel, um einen Gasstrom (1), der mindestens ein NOx und/oder mindestens ein SOx und/oder Schwebstoffe und mindestens 15 Mol-% CO2 auf trockener Basis umfasst, in den Waschturm zu leiten, um ihn mit Hilfe von Wasser (3) und/oder einer alkalischen Flüssigkeit (2) zu kühlen und zu waschen, um ein mit CO2 angereichertes Gas (5) am oberen Ende des Turms und eine mit dem mindestens einen NOx und/oder dem mindestens einen SOx und/oder Schwebstoffen angereicherte Behälterflüssigkeit (3, 7) am unteren Ende des Turms zu erzeugen, Mittel zur Entnahme der Behälterflüssigkeit aus dem Turm, Mittel, um mindestens einen Teil (7) der Behälterflüssigkeit in den Verdampfer zu leiten, um sie durch direkten oder indirekten Wärmeaustausch mit einem Luftstrom zu verdampfen, gegebenenfalls nach der Behandlung mindestens eines Teils der Behälterflüssigkeit in der Behandlungseinheit, um sie zu reinigen, und/oder nach der Lagerung mindestens eines Teils der Behälterflüssigkeit, Mittel, um den Strom gekühlter Luft (21) in den Verdampfer zu den Wärmeaustauschmitteln zu leiten, um einen indirekten oder direkten Wärmeaustausch mit einem zu kühlenden Wasserstrom (25) durchzuführen, wodurch ein Strom gekühlten Wassers (27) gebildet wird.

10. Vorrichtung nach Anspruch 9, die eine Pumpe zur Druckbeaufschlagung zumindest eines Teils der Tankflüssigkeit (7) oder der gereinigten Flüssigkeit (13), falls stromaufwärts des Verdampfers (E1) vorhanden, umfasst.

11. Vorrichtung nach Anspruch 9 oder 10, umfassend eine Behandlungseinheit zur Behandlung des mindestens einen Teils der Tankflüssigkeit (7) stromaufwärts des Verdampfers (E1), um das mindestens eine NO_{X}und/oder das mindestens eine SOₓund/oder die darin enthaltenen Schwebstoffe zumindest teilweise zu entfernen.

12. Vorrichtung nach einem der Ansprüche 9 bis 11, umfassend einen Speicher zum Speichern des mindestens einen Teils (7) der Wannenflüssigkeit oder der gereinigten Flüssigkeit (8) vor dem Verdampfer (E1).

13. Vorrichtung nach einem der Ansprüche 9 bis 12, umfassend Mittel zur Regelung der Zuführung zumindest eines Teils der Tankflüssigkeit (7) oder der gereinigten Flüssigkeit (8) zum Verdampfer in Abhängigkeit von der Umgebungstemperatur.

14. Vorrichtung zum Trennen eines Gasstroms (1), umfassend eine Waschvorrichtung nach einem der Ansprüche 9 bis 13, einen Kompressor (C) und eine Destillations-/Teilkondensations-Trennvorrichtung (CC), die mit der Waschvorrichtung verbunden ist, um das CO2-angereicherte Gas zu trennen, wobei ein CO2-angereichertes Produktfluid in Bezug auf das Gas gebildet wird, Mittel zum Senden des Stroms von gekühltem Wasser zum Kühlen des Kompressors, wobei der Kompressor ein Verdichter ist:
i) des Gasstroms (1) stromaufwärts des Turms oder
ii) eines CO2-angereicherten Gases (5), das am oberen Ende des Turms abgezogen wird, oder
iii) eines CO2-angereicherten Produkts (29), das durch Teilkondensation und/oder Destillation des am oberen Ende des Turms abgezogenen CO2-angereicherten Gases hergestellt wird.

## Claims

1. Process for washing a gas stream in which :
i) a gas stream (1) comprising at least one NOx and/or at least one SOx and/or suspended matter and at least 15 mol% CO2 on a dry basis is sent to a scrubbing tower (K) in which it is cooled and scrubbed by means of water (4) and/or an alkaline liquid (2) to produce a CO2-enriched gas (5) at the top of the tower and a tank liquid (3, 7) enriched with the at least one NOx and/or the at least one SOx and/or suspended matter at the bottom of the tower,
ii) at least part (7) of the tank liquid is optionally filtered and/or demineralised to produce a purified liquid (8, 13),
iii) at least part of the tank liquid (7) from step i) or the purified liquid (8) from step ii), if present, is used to cool an air flow (19) by direct contact evaporation or indirect heat exchange forming a cooled air flow (21), and
iv) the cooled air flow is used to cool a water flow (25) by indirect or direct heat exchange forming a cooled water flow (27).

2. Process according to claim 1 in which at least part of the tank liquid (7) from stage i) or the cleaned liquid (13) from stage ii) if present is pressurised by a pump (P) upstream of stage iii).

3. Method according to claim 1 or 2 in which the flow of cooled water (27) is used to cool a compressed gas between two stages of a compressor and/or after the last stage of a compressor (C) by heat exchange, the compressor being a :
i) The gas stream (1) upstream of the tower (K) or
ii) The CO2-enriched gas (5) withdrawn at the top of the tower or
iii) A CO₍₂₎-enriched product (29) produced by partial condensation and/or distillation of the CO₂-enriched gas withdrawn at the top of the tower, this gas containing oxygen and/or nitrogen and/or carbon monoxide.

4. Process according to one of the preceding claims in which the at least one part of the tank liquid (7) is treated upstream of its vaporisation in order to at least partially remove the at least one NO_{(X})and/or the at least one SOₓand/or the suspended matter which it contains, the components removed being arranged (9, 11).

5. Process according to one of the preceding claims in which the at least one part (7) of the vat liquid from step i) or the purified liquid (8) from step ii), if present, is stored in a tank (S) upstream of the vaporization.

6. Process according to claim 5 in which at least part of the vat liquid (7) from step i) or the purified liquid (8) from step ii), if present, is not used to cool the air flow (19) by evaporation if the ambient temperature is below a threshold and is stored in the storage (S) if the ambient temperature is below the threshold.

7. A method according to claim 6 in which at least part of the tank liquid (7) from step i) or the cleaned liquid (8) from step ii), if present, is used to cool the air flow (19) by evaporation only if the ambient temperature is higher than the threshold.

8. Method according to one of the preceding claims in which the liquid flow (15) is vaporised by nebulisation or in adiabatic air coolers or in hybrid air coolers (E1).

9. Apparatus for scrubbing a gas stream comprising a scrubbing tower (K), optionally a treatment unit (T), optionally a storage (S), an evaporator (E1), a heat exchange means (E2), means for sending a gas stream (1) comprising at least one NOx and/or at least one SOx and/or suspended matter and at least 15 mol% CO2 on a dry basis to the scrubbing tower for cooling and scrubbing by means of water (3) and/or an alkaline liquid (2) to produce a CO2-enriched gas (5) at the top of the tower and a tank liquid (3, 7) enriched with the at least one NOx and/or the at least one SOx and/or suspended matter at the bottom of the tower, means for removing the vat liquid from the tower, means for sending at least part (7) of the vat liquid to the evaporator for vaporisation by direct or indirect heat exchange with a flow of air, optionally after treating at least part of the vat liquid in the treatment unit to purify it and/or after storing at least part of the vat liquid in storage, means for sending the flow of cooled air (21) into the evaporator to the heat exchange means for indirect or direct heat exchange with a flow of water (25) to be cooled forming a flow of cooled water (27).

10. Apparatus according to claim 9 comprising a pump for pressurising at least part of the tank liquid (7) or the purified liquid (13) if present upstream of the evaporator (E1).

11. Apparatus according to claim 9 or 10 comprising a treatment unit for treating the at least part of the tank liquid (7) upstream of the evaporator (E1) to remove at least partially the at least one NOxand/or the at least one SOₓand/or the suspended matter contained therein.

12. Apparatus according to one of claims 9 -11 comprising a storage for storing the at least one part (7) of the vat liquid or the purified liquid (8). upstream of the evaporator (E1).

13. Apparatus according to one of claims 9 to 12 comprising means for regulating the sending of at least part of the tank liquid (7) or the cleaned liquid (8) to the evaporator as a function of the ambient temperature.

14. Apparatus for separating a gas stream (1) comprising a washing apparatus according to one of claims 9 to 13, a compressor (C) and a distillation/partial condensation separation apparatus (CC) connected to the washing apparatus for separating the CO2-enriched gas forming a CO2-enriched product fluid with respect to the gas, means for sending the flow of cooled water to cool the compressor, the compressor being a compressor :
i) Of the gas stream (1) upstream of the tower or
ii) CO2-enriched gas (5) drawn off at the top of the tower or
iii) A CO2-enriched product (29) produced by partial condensation and/or distillation of the CO2-enriched gas withdrawn from the top of the tower.
